# EUROPÄISCHE PATENTSCHRIFT

(11) **EP 3 208 431 B1**
(45) Veröffentlichungstag und Bekanntmachung des Hinweises auf die Patenterteilung: **05.01.2022**
(21) Anmeldenummer: 16155900.0
(22) Anmeldetag: 16.02.2016
(51) Int. Cl.: F01D 25/16, F01D 25/24, F01D 25/26, F16B 2/06, F02C 7/20, F16B 43/02, F01D 9/06, F16B 1/00, F16B 2/14

(54) **VERBINDUNGSANORDNUNG FÜR GEHÄUSEELEMENT EINES TURBINENZWISCHENGEHÄUSES**
CONNECTION ASSEMBLY FOR HOUSING ELEMENT OF A TURBINE CENTER FRAME
SYSTÈME DE RACCORDEMENT POUR ÉLÉMENT D'UN BOÎTIER INTERMEDIAIRE DE TURBINE

(43) Veröffentlichungstag der Anmeldung: 23.08.2017
(73) Patentinhaber: MTU Aero Engines AG, 80995 München (DE)
(72) Erfinder: Hartwich, Andreas, Karlsfeld 85757 (DE)

(56) Entgegenhaltungen:
- EP-A1- 1 939 459
- WO-A2-2010/007220
- FR-A1- 2 692 006
- GB-A- 2 280 484

## Beschreibung

Die vorliegende Erfindung betrifft eine Verbindungsanordnung für einen Heißgas führenden Ringkanal eines Turbinenzwischengehäuses einer Gasturbine, insbesondere Fluggasturbine, umfassend ein erstes Gehäuseelement, insbesondere ein Panel eines Turbinenzwischengehäuses, ein zweites Gehäuseelement, insbesondere ein Fairing eines Turbinenzwischengehäuses, das in Umfangsrichtung neben dem ersten Gehäuseelement angeordnet ist, eine Befestigungseinheit, die dazu eingerichtet ist, das erste Gehäuseelement und das zweite Gehäuseelement an in Umfangsrichtung zueinander benachbarten Rändern des ersten Gehäuseelements und des zweiten Gehäuseelements miteinander zu verbinden, wobei die Befestigungseinheit ein durch ein Verbindungsmittel, insbesondere Schrauben-Mutter-Verbindung, an dem einen Gehäuseelement angebrachtes Klemmelement umfasst, das an einer an dem anderen Gehäuseelement vorgesehenen Klemmfläche anliegt, derart, dass das andere Gehäuseelement zwischen dem Klemmelement und dem einen Gehäuseelement aufgenommen ist. Eine derartige Verbindungsanordnung ist beispielsweise aus der US 5,451,116 A bekannt. Aus der EP 1 939 459 A1 ist eine Klemmverbindung zwischen zwei Bauteilen bekannt, bei der ein klemmendes Element aufgrund eines Formschlusses nicht um eine in Klemmrichtung verlaufende Achse gedreht werden kann. Verbindungsanordnungen für Gehäuse von Gasturbinen sind aus der FR 2 692 006 A1 und der WO 2010/007220 A2 bekannt. Platten zum Klemmen überlagerter Paneele und Bänder sind aus der BG 2 280 484 A bekannt.

Es wird darauf hingewiesen, dass Richtungsangaben wie "Axial-" bzw. "axial", "Radial-" bzw. "radial" und "Umfangs-" grundsätzlich auf die Maschinenachse der Gasturbine bezogen zu verstehen sind, sofern sich aus dem Kontext nicht explizit oder implizit etwas anderes ergibt.

Ein Turbinenzwischengehäuse (Turbine Center Frame oder TCF), insbesondere dessen Anteil, der den Heißgaskanal begrenzt, umfasst typischer Weise eine Vielzahl von Gehäuseelementen, die auch als Panels und Fairings (zur aerodynamischen Ummantelung der Streben) bezeichnet werden können. Diese Gehäuseelemente sind miteinander durch Schraub-/Klemmverbindungen, so genannte "Dorito-Verbindungen", verbunden. Die Gehäuseelemente bzw. Fairings und Panels definieren zusammen den ringförmigen Gaskanal zum Leiten des Heißgases aus der Hochdruckturbine in die Niederdruckturbine. Eine derartige auf Klemmung basierende Bauweise wird gewählt, um thermisch bedingte Relativbewegungen zwischen den Fairings und Panels beim Übergang der Gasturbine von einem Betriebszustand in einen anderen Betriebszustand in bestimmten Grenzen zu erlauben, ohne unzulässig hohe Spannungen in den Fairings und Panels zu erzeugen.

In der Praxis hat sich jedoch gezeigt, dass sich die gewölbten Gehäuseelemente, insbesondere die Panels, wenn sie im Betrieb heiß werden, ein Stück weit entwölben. Sobald sie wieder abkühlen, nehmen sie ihre ursprüngliche Form an. Entlang der axialen Richtung wird jedes Gehäuseelement, insbesondere Panel durch mehrere, bevorzugt drei voneinander im Abstand angeordneten Klemmverbindungen (Doritos) gehalten. Aufgrund der im Betrieb auftretenden Entwölbung liegt ein Klemmelement der Klemmverbindungen nicht mehr gerade auf einer Gegenklemmfläche am Gehäuseelement bzw. Panel. Hierdurch kann das Klemmelement entlang der "schiefen Ebene" beim entwölbten Gehäuseelement bzw. Panel verrutschen. Dies führt zu hohen lokalen Kraftwirkungen auf die Gegenklemmflächen an den Gehäuseelementen bzw. Panels und zu einem entsprechenden Verschleiß. Besonders stark ist dieser nachteilige Effekt in der Praxis an radial äußeren Gehäuseelementen bzw. Panels bei den stromabwärtigen Klemmverbindungen bzw. Doritoverbindungen zu erkennen, sowie an den radial inneren Gehäuseelementen bzw. Panels bei den stromaufwärtigen Klemmverbindungen bzw. Doritoverbindunge n.

Aufgabe der Erfindung ist es, eine Verbindunganordnung bereitzustellen, welche die genannten Nachteile vermindert oder vermeidet.

Zur Lösung dieser Aufgabe werden die in den angehängten unabhängigen Ansprüchen 1-3 definierten drei Alternativen vorgeschlagen, wobei in den ersten beiden dieser Alternativen unter anderem die dem Klemmelement zugewandte Oberseite der Klemmfläche bezogen auf einen Längsschnitt, der im Wesentlichen parallel zu den benachbarten Rändern der beiden Gehäuseelemente verläuft, eine Klemmflächenkontur aufweist, die derart ausgebildet ist, dass sie einer Verdrehung des Klemmelements um eine Achse des Verbindungsmittels entgegenwirkt. Insbesondere liegt der Längsschnitt, der durch die Klemmfläche geht, in einer Meridianebene, also einer Ebene, die die Dreh- bzw.

Maschinenachse der Gasturbine umfasst.

Durch eine entsprechende Ausgestaltung der Klemmflächenkontur kann der Effekt einer Entwölbung des Gehäuseelements, insbesondere im Bereich der Befestigungseinheit, kompensiert werden, so dass trotz auftretender Entwölbung keine nachteilige Relativbewegung zwischen Klemmelement und Klemmfläche auftritt.

Gemäß einer ersten erfmdungsgemäßen Alternative wird vorgeschlagen, dass die Klemmflächenkontur wenigstens einen Klemmflächenkonturabschnitt aufweist, der eine Steigung aufweist, die sich von einer Steigung einer Oberflächenkontur eines die Klemmfläche umgebenden Oberflächenabschnitts des Gehäuseelements unterscheidet. Die Oberflächenkontur des die Klemmfläche umgebenden Oberflächenabschnitts, auf die hier Bezug genommen wird, ist dabei vorzugsweise im Wesentlichen parallel zu einem dem Klemmflächenkonturabschnitt gegenüberliegenden Innenoberfläche nabschnitt ausgebildet, welcher den ringförmigen Heißgaskanal definiert. Somit weist das die Klemmfläche umfassende Gehäuseelement im Bereich der Klemmfläche vorzugsweise keine konstante Wanddicke auf.

Die Steigung der Klemmflächenkontur wird dabei so gewählt, dass Sie entgegen einer Entwölbungsrichtung ausgebildet ist, so dass die auftretende Entwölbung durch die veränderte Steigung der Klemmfläche kompensiert werden kann. Insbesondere wird die Steigung der Klemmfläche dabei so gewählt, dass in einem bevorzugten Betriebszustand der Gasturbine, zum Beispiel einem Reiseflugzustand eines Flugtriebwerks, bei welcher eine Entwölbung des die Klemmfläche umfassenden Gehäuseelements auftritt, eine Längsachse des Verbindungsmittels, insbesondere eine Längsachse einer Schraube des Verbindungsmittels, wie in der eingangs erwähnten US 5,451,116 A dargestellt, im Kontaktpunkt mit der Klemmfläche im Wesentlichen orthogonal zu der Klemmflächenkontur ausgerichtet ist. Auf diese Weise kann einem "Abrutschen" des Klemmelements auf einer "schiefen Ebene" der Klemmfläche und einem damit einhergehenden Verschleiß in dem besagten Betriebszustand entgegengewirkt werden.

Gemäß der ersten erfindungs gemäßen Alternative ist die Klemmflächenkontur eine gerade Linie, die relativ zu einer geraden Linie der Oberflächenkontur geneigt ist, wobei die Linie der Klemmflächenkontur und die Linie der Oberflächenkontur einen Winkel von etwa 0,7° bis 1,7°, vorzugsweise 1,0° bis 1,4° bilden.

Gemäß einer zweiten erfindungsgemäßen Alternative, d.h. alternativ zu einer geradlinigen veränderten Neigung, weist die Klemmflächenkontur wenigstens einen gekrümmten Linienabschnitt auf, derart dass ein Abstand zwischen der Klemmflächenkontur und der Oberflächenkontur zunimmt.

Sowohl die geradlinig geneigte Klemmfläche als auch die gekrümmte bzw. gebogenen Klemmfläche verbessern das Beibehalten einer gewünschten Relativstellung von Klemmelement und Klemmfläche. Insbesondere wird durch einen bezogen auf die Oberflächenkontur erhöhten Bereich der Klemmfläche einer Drehbewegung des Klemmelements entgegengewirkt.

Gemäß einer weiteren, dritten erfindungsgemäßen Alternative ist ein auf der Klemmfläche aufliegender Klemmabschnitt des Klemmelements kugelförmig ausgebildet, insbesondere in der Art einer Kugelkalotte, so dass zwischen dem Klemmelement und der Klemmfläche eine Punktanlage gebildet ist.

Die Erfindung betrifft ferner auch ein Turbinenzwischengehäuse für eine Gasturbine, insbesondere Fluggasturbine, umfassend einen Heißgas führenden Ringkanal der durch mehrere in Umfangsrichtung nebeneinander angeordnete Gehäuseelemente gebildet ist, wobei der Ringkanal in Umfangsrichtung begrenzt wird durch radial innere Gehäuseelemente und radial äußere Gehäuseelemente, wobei sich zwischen den inneren Gehäuseelementen und den äußeren Gehäuseelementen mehrere Strebenverkleidungselemente erstrecken, die in Umfangsrichtung verteilt angeordnet sind und in radialer Richtung durch den Ringkanal verlaufen, und wobei die inneren Gehäuseelemente und die äußeren Gehäuseelemente jeweils durch mehrere erste Gehäuseelemente und mehrere zweite Gehäuseelemente gebildet werden, und wobei das Turbinenzwischengehäuse wenigstens eine der oben beschriebenen und jeweils in den Ansprüchen 1-3 definierten Verbindungsanordnung umfasst.

Andres ausgedrückt kann das Turbinenzwischengehäuse also mehrere Befestigungseinheiten aufweisen, die dazu eingerichtet sind benachbarte Gehäuseelemente an ihren in Umfangsrichtung benachbarten Rändern miteinander zu verbinden, wobei eine jeweilige Befestigungseinheit ein durch ein Verbindungsmittel, insbesondere Schrauben-Mutter-Verbindung, an einem ersten Gehäuseelement angebrachtes Klemmelement umfasst, das an einer an einem benachbarten zweiten Gehäuseelement vorgesehenen Klemmfläche anliegt, derart, dass das zweite Gehäuseelement zwischen dem Klemmelement und dem ersten Gehäuseelement aufgenommen ist, wobei wenigstens eine der Klemmflächen des zweiten Gehäuseelements eine dem zugeordneten Klemmelement des ersten Gehäuseelements zugewandte Oberseite aufweist, die eine auf einen axialen Längsschnitt bezogene Klemmflächenkontur aufweist, die derart ausgebildet ist, dass sie einer Verdrehung des Klemmelements um eine Achse des Verbindungsmittels entgegenwirkt.

Weiterbildend wird vorgeschlagen, dass ein erstes Gehäuseelement und ein zweites Gehäuseelement durch mehrere, insbesondere drei Befestigungseinheiten, die in axialer Richtung verteilt sind, miteinander verbunden sind.

Es ist bevorzugt, dass bei radial äußeren Gehäuseelementen die in Strömungsrichtung letzte Befestigungseinheit eine Klemmflächenkontur aufweist, die der Verdrehung des Klemmelements entgegenwirkt.

Bei radial inneren Gehäuseelementen kann die in Strömungsrichtung erste Befestigungseinheit eine Klemmflächenkontur aufweisen, die der Verdrehung des Klemmelements entgegenwirkt.

Wie bereits oben für die Verbindungsanordnung erwähnt, weist in einer Alternative beim Turbinenzwischengehäuse die Klemmflächenkontur wenigstens einen Klemmflächenkonturabschnitt auf, der eine Steigung aufweist, die sich von einer Steigung einer Oberflächenkontur eines die Klemmfläche umgebenden Oberflächenabschnitts des zweiten Gehäuseelements unterscheidet.

In dieser Alternative ist die Klemmflächenkontur eine gerade Linie, die relativ zu einer geraden Linie der Oberflächenkontur geneigt ist, wobei die Linie der Klemmfläche n-kontur und die Linie der Oberflächenkontur einen Winkel von etwa 0,7° bis 1,7°, vorzugsweise 1,0° bis 1,4° bilden.

Auch bei dem Turbinenzwischengehäuse weist die Klemmfläc henkontur in einer weiteren Alternative wenigstens einen gekrümmten Linienabschnitt auf, derart dass ein Abstand zwischen der Klemmflächenkontur und der Oberflächenkontur zunimmt.

Weiterhin alternativ sind bei dem Turbinenzwischengehäuse die auf einer zugeordneten Klemmfläche aufliegenden jeweiligen Klemmabschnitte der Klemmelemente kugelförmig ausgebildet, insbesondere in der Art einer Kugelkalotte, so dass zwischen dem Klemmelement und der Klemmfläche eine Punktanlage gebildet ist.

Nachfolgend wird die Erfindung unter Bezugnahme auf die anliegenden Figuren beispielhaft und nicht einschränkend beschrieben.
Fig. 1 zeigt schematisch und vereinfacht einen perspektivische Ansicht eines Gehäuseelements.
Fig. 2 zeigt eine Teilschnittdarstellung des Gehäuseelements entsprechend der Schnittlinie II-II.
Fig. 3 zeigt in den Teilfiguren A) und B) alternative Ausführungsformen einer Klemmfläche des Gehäuseelements der Fig. 1 und 2.

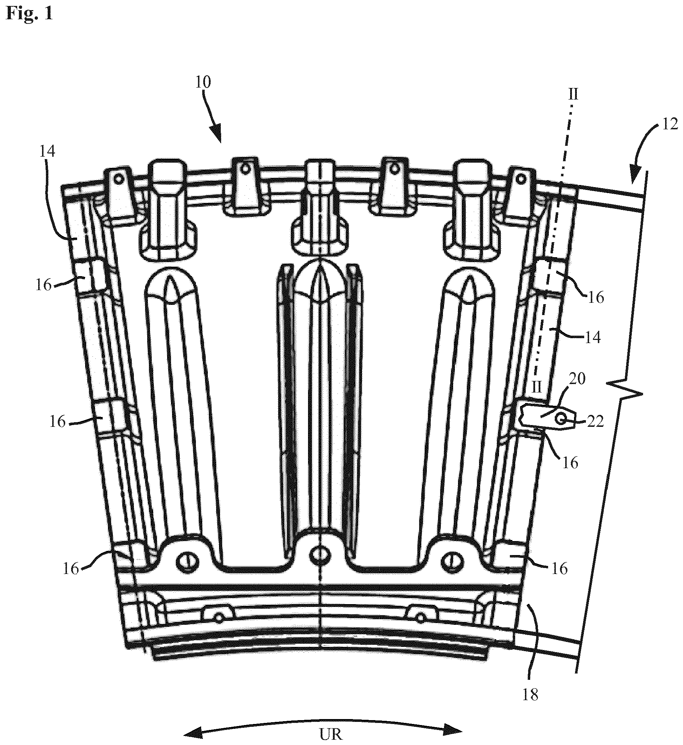

Fig. 1 zeigt schematisch und vereinfacht ein erstes Gehäuseelement 10 eines nicht weiter dargestellten Turbinenzwischengehäuses. Das erste Gehäuseelement 10 kann auch als sogenanntes Panel bezeichnet werden. Das erste Gehäuseelement 10 schließt in Umfangsrichtung UR an ein nur angedeutetes zweites Gehäuseelement 12 an. Das zweite Gehäuseelement 12 kann beispielsweise ein sogenanntes Fairing sein, also ein Gehäusebauteil, das zum einen den Heißgasführenden Ringkanal des Turbinenzwischengehäuses begrenzt und zum anderen durch diesen Ringkanal verlaufende Streben oder Leitungen umgibt.

Das erste Gehäuseelement 10 weist an seinen in Umfangsrichtung UR entgegengesetzten Rändern 14 jeweils mehrere Klemmflächen 16 auf. Vorzugsweise sind entlang eines jeweiligen Randes 14 drei Klemmflächen 16 vorgesehen. Am zweiten Gehäuseelement 14 sind an den jeweiligen Rändern 18 Klemmelemente 20 angebracht, von denen lediglich eines stark vereinfacht dargestellt ist. Die Klemmelemente 20 sind bevorzugt mittels einer Schrauben-Mutter-Verbindung 22 am zweiten Gehäuseelement 18 befestigt. die hier vereinfacht als Kreis dargestellt ist. Ein Klemmelement 20 und eine zugeordnete Klemmfläche 16 können auch als Befestigungseinheit bezeichnet werden, die dazu dient, das erste Gehäuseelement 10 und das zweite Gehäuseelement 12 miteinander zu verbinden. Die Befestigungseinheiten sind insbesondere so ausgestaltet, dass die Klemmflächen 16 zwischen dem Klemmelement 20 und einem in der Darstellung nicht sichtbaren Rand des zweiten Gehäuseelements 12 aufgenommen sind.

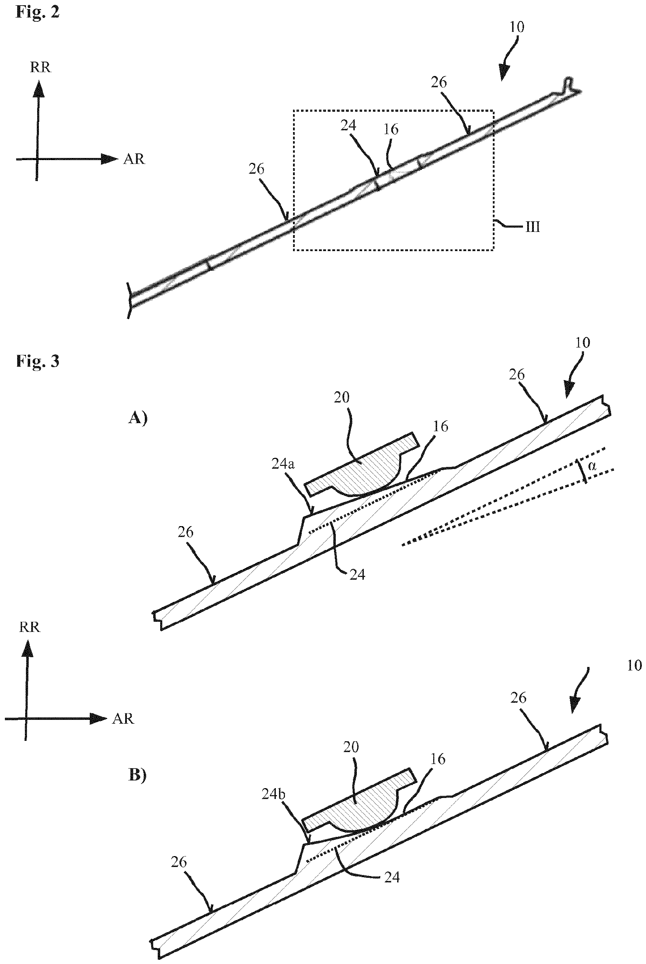

Fig. 2 zeigt eine Teilschnittdarstellung entlang der Schnittlinie II-II, die entlang bzw. im Wesentlichen parallel zum Rand 14 des ersten Gehäuseelements 10 verläuft. Die geschnittene Klemmfläche 16 ist die in axialer Richtung stromabwärtig letzte Klemmfläche am ersten Gehäuseelement 10. Fig. 2 zeigt das erste Gehäuseelement 10 mit der Klemmfläche 16 in der bisher bekannten Ausführung. Dabei ist die Klemmflächenkontur 24 der Klemmfläche 16 im Wesentlichen parallel zu einer die Klemmfläche 16 umgebenden Oberflächenkontur 26 des ersten Gehäuseelements 10 bzw. dessen Rand 14. In Fig. 2 ist mit einem gestrichelten Rechteck ein Bereich bezeichnet, der in den Fig. 3A und 3B vergrößert dargestellt ist, wobei die Fig. 3A und 3B Ausführungsformen der Erfindung darstellen.

In den Fig. 3A und 3B ist die Klemmfläche 16 vergrößert dargestellt. Mit einer punktierten Linie ist der bekannte Verlauf der Klemmflächenkontur 24 dargestellt, wie er aus der Fig. 2 ersichtlich ist.

Die Klemmfläche 16 weist in Fig. 3A eine veränderte Klemmflächenkontur 24a auf, die bezogen auf die umgebende Oberflächenkontur 26 geneigt ist. Die in der Fig. 3A dargestellte Neigung ist zu Illustrationszwecken nicht maßstäblich korrekt gezeigt. Ein durch die Klemmfläche 16 bzw. deren Klemmflächenkontur 24a und der Oberflächenkontur 26 gebildeter Winkel A beträgt etwa 0,7° bis 1,7°, insbesondere liegt er in einem Bereich von 1,0° bis 1,4°. Dies entspricht auf einer Länge der Klemmflächenkontur von beispielsweise 50mm einer Steigung von etwa 0,6 bis 1,5mm

In den Figuren 3A und 3B ist auch stark vereinfacht und schematisch ein Klemmelement 20 dargestellt, das mit einem Klemmabschnitt 28 auf der Klemmfläche 14 aufliegt. Der Klemmabschnitt ist kugelförmig ausgebildet, insbesondere in der Art einer Kugelkalotte, so dass zwischen dem Klemmelement 20 und der Klemmfläche 16 bzw. der Klemmflächenkontur 24a eine Punktanlage gebildet ist. Wie aus der Fig. 3A ersichtlich, verhindert die geneigte Klemmflächenkontur 24a ein Abgleiten des Klemmelements 20 in axialer Richtung AR bzw. eine Verdrehen des Klemmelements um die Schrauben-Mutter-Verbindung 22 (Fig. 1). Bei einer sogenannten Entwölbung des Gehäuseelements 10 im Betrieb der Gasturbine Bewegt sich die Klemmflächenkontur 24a in Richtung der Lage der herkömmlichen Klemmflächenkontur 24 (gestrichelte Line). Aufgrund der Neigung der Klemmflächenkontur 24a kann aber trotz dieser Entwölbung gewährleitstet werden, dass ein Abgleiten des Klemmelements 20 auch im entwölbten Zustand des Gehäuseelements 10 verhindert werden kann.

Fig. 3B zeigt eine alternative Ausführungsform der Klemmflächenkontur 24b. In diesem Beispiel weist die Klemmflächenkontur 24b eine gekrümmte bzw. gebogene Form auf. Auch in Fig. 3B ist der Krümmungsradius zu Illustrationszwecken nicht maßstabsgetreu abgebildet.

Der Krümmungsradius der Klemmflächenkontur 24b kann über die gesamte axiale Länge der Klemmfläche 16 gleich sein, so dass die Klemmflächenkontur 24b einen Teil eines Kreisbogens beschreibt. Alternativ kann der Krümmungsradius auch abschnittsweise unterschiedlich sein, so dass die Klemmflächenkontur 24b parabelförmig ausgebildet ist. Die Krümmung ist bezogen auf das Klemmelement 20 konkav ausgeführt. Wie bereits oben zur Ausführungsform der Fig. 3A ausgeführt, soll auch die gekrümmte Klemmflächenkontur so gewählt werden, dass die maximale Steigung über eine beispielhafte Länge der Klemmflächenkontur von 50mm nicht mehr als etwa 0,6 bis 1,5mm beträgt.

Beiden Ausführungsformen der Fig. 3A und 3B ist gemeinsam, dass sie verglichen mit der umgebenden Oberflächenkontur 26 eine andere Steigung aufweisen. Anders ausgedrückt kann auch gesagt werden, dass die Klemmflächenkontur (im geneigten Fall) oder eine an die Klemmflächenkontur angelegte Tangente (im gekrümmten Fall) mit der Axialrichtung AR bzw. der Radialrichtung RR einen anderen Winkel bilden, als die umgebende Oberflächenkontur 26 des Gehäuseelements 10, insbesondere dessen Rand 14.

Die in Fig. 3B dargestellte Ausführungsform zeigt eine Klemmflächenkontur 24b, die derart gekrümmt ist, dass sich eine Dicke des ersten Gehäuseelements 10 im Bereich der Klemmflächenkontur 24b kontinuierlich in Axial- bzw. Strömungsrichtung von dem stromaufwärtigen Ende der Klemmflächenkontur 24b (links in Fig. 3B) zu dem stromabwärtigen Ende der Klemmflächenkontur 24b (rechts in Fig. 3B) hin verkleinert. In einer alternativen Ausführungsform kann die Klemmflächenkontur jedoch auch so gekrümmt sein, dass ein Punkt geringster Dicke des ersten Gehäuseelements 10 im Bereich der Klemmflächenkontur etwa in Axial- bzw. Strömungsrichtung in der Mitte zwischen dem stromaufwärtigen Ende der Klemmflächenkontur 24b (links in Fig. 3B) und dem stromabwärtigen Ende der Klemmflächenkontur 24b (rechts in Fig. 3B) befindet. Mit anderen Worten nimmt die Dicke zu den Randbereichen in Axial- bzw. Strömungsrichtung der Klemmflächenkontur zu. Damit lässt sich ein besserer Verdrehschutz realisieren.

In Umfangsrichtung des ersten Gehäuseelements 10 (orthogonal zu der Bildebene der Fig. 3A und 3B) ändert sich die Dicke des ersten Gehäuseelements 10 im Bereich der Klemmflächenkontur 24a, 24b vorzugsweise nicht. Es kann jedoch in besonderen Fällen auch hier vorteilhaft sein, eine sich in Umfangsrichtung ändernde Dicke vorzusehen.

Die Neigung oder Krümmung der Klemmflächenkontur 24a, 24b kann neben dem Effekt des Verhinderns eines Abgleitens des Klemmelements 20 auch dahingehend ausgebildet sein, dass sie eine Art Rückstellkraft auf das Klemmelement ausübt, so dass dieses in seine ursprüngliche Klemmposition bzw. in seine gewünschte Relativstellung zur Klemmfläche bewegt wird, insbesondere wenn das Gehäuseelement 10 von einem entwölbten Zustand im Betrieb der Gasturbine wieder einen gewölbten Zustand insbesondere bei Stillstand der Gasturbine übergeht.

Die hier vorgestellte Verbindungsanordnung mit einer geneigten bzw. gekrümmten Klemmflächenkontur kann an jeweils allen Klemmflächen eines ersten Gehäuseelements vorgesehen werden. Alternativ ist es auch möglich, dass nur bestimmte Klemmflächen geneigt bzw. gekrümmt ausgeführt werden, insbesondere diejenigen Klemmflächen, bei denen man aus der Erfahrung erkannt hat, dass das Risiko des Abgleitens der Klemmelemente besonders hoch ist. Die vorgestellte Verbindungsanordnung wurde am Beispiel von radial außen liegenden Gehäuseelementen 10, 12 erklärt. Eine solche Verbindungsanordnung kann aber auch an radial innen liegenden Gehäuseelementen eines Turbinenzwischengehäuses eingesetzt werden.

Bei radial äußeren Gehäuseelementen 10, 12 (Fig. 1) kann die geneigte bzw. gekrümmte Klemmflächenkontur insbesondere an der in Strömungsrichtung letzten Verbindungsanordnung vorgesehen sein. In Fig. 1 entspricht dies den links und rechts des Gehäuseelements 10 oben dargestellten Klemmflächen 16, von denen die rechte auch in der Schnittdarstellung der Fig. 2, 3A und 3B illustriert ist.

Bei radial inneren Gehäuseelementen, die hier nicht näher gezeigt sind, kann die in Strömungsrichtung erste Befestigungseinheit bzw. Verbindunganordnung eine Klemmflächenkontur aufweisen, die der Verdrehung des Klemmelements entgegenwirkt. In Analogie zur Figur 1 wären dies beispielsweise die links und rechts unten angeordneten Klemmflächen.

Die geneigte oder gekrümmte Klemmflächenkontur kann beispielsweise durch Materialabtrag an der herkömmlichen Klemmfläche hergestellt werden. Um allerding einer Schwächung der Struktur des Gehäuseelements vorzubeugen, kann die geneigte oder gekrümmte Klemmflächenkontur auch durch den Guss eines Gehäuseelements hergestellt werden, bzw. kann an dem Gußrohteil bereits ein gegenüber dem Stand der Technik aufgedickter Anlageabschitt vorgesehen werden bzw. sein, der es erlaubt, die geneigte oder gekrümmte Klemmflächenkontur durch mechanische Nachbearbeitung zu erzeugen, ohne dabei eine für die strukturelle Stabilität erforderliche Mindestwandstärke zu unterschreiten.

### Bezugszeichenliste

- 10: erstes Gehäuseelement
- 12: zweites Gehäuseelement
- 14: Rand
- 16: Klemmfläche
- 18: Rand
- 20: Klemmelement
- 22: Schrauben-Mutter-Verbindung
- 24, 24a, 24b: Klemmflächenkontur
- 26: Oberflächenkontur
- 28: Klemmabschnitt
- AR: Axialrichtung
- RR: Radialrichtung
- UR: Umfangsrichtung

## Patentansprüche

1. Verbindungsanordnung für einen Heißgas führenden Ringkanal eines Turbinenzwischengehäuses einer Gasturbine, insbesondere Fluggasturbine, umfassend
ein erstes Gehäuseelement (10), insbesondere ein Panel eines Turbinenzwischengehäuses,
ein zweites Gehäuseelement (12), insbesondere ein Fairing eines Turbinenzwischengehäuses, das in Umfangsrichtung (UR) neben dem ersten Gehäuseelement (10) angeordnet ist,
eine Befestigungseinheit, die dazu eingerichtet ist, das erste Gehäuseelement (10) und das zweite Gehäuseelement (12) an in Umfangsrichtung (UR) zueinander benachbarten Rändern (14, 18) des ersten Gehäuseelements (10) und des zweiten Gehäuseelements (12) basierend auf einer Klemmung derart miteinander zu verbinden, dass thermisch bedingte Relativbewegungen beim Übergang der Gasturbine von einem Betriebszustand in einen anderen Betriebszustand in bestimmten Grenzen erlaubt werden, wobei die Befestigungseinheit ein durch ein Verbindungsmittel (22), insbesondere Schrauben-Mutter-Verbindung, an dem einen Gehäuseelement (12) angebrachtes Klemmelement umfasst, das an einer an dem anderen Gehäuseelement (10) vorgesehenen Klemmfläche (16) anliegt, derart, dass das andere Gehäuseelement (10) zwischen dem Klemmelement (20) und dem einen Gehäuseelement (12) aufgenommen ist,
**dadurch gekennzeichnet, dass** die dem Klemmelement (20) zugewandte Oberseite der Klemmfläche (16) bezogen auf einen Längsschnitt, der im Wesentlichen parallel zu den benachbarten Rändern (14, 18) der beiden Gehäuseelemente (10, 12) verläuft und der in einer Ebene liegt, die die Drehachse der Gasturbine umfasst, eine Klemmflächenkontur (24a, 24b) aufweist, die derart ausgebildet ist, dass sie bei einer Entwölbung des ersten oder zweiten Gehäuseelements einer Verdrehung des Klemmelements (20) um eine Achse des Verbindungsmittels (22) entgegenwirkt, wobei
die Klemmflächenkontur (24a, 24b) wenigstens einen Klemmflächenkonturabschnitt aufweist, der eine Steigung aufweist, die sich von einer Steigung einer Oberflächenkontur (26) eines die Klemmfläche (16) umgebenden Oberflächenabschnitts des Gehäuseelements (10) unterscheidet, wobei die Klemmflächenkontur (24a) eine gerade Linie ist, die relativ zu einer geraden Linie der Oberflächenkontur (26) geneigt ist, wobei die Linie der Klemmflächenkontur (24a) und die Linie der Oberflächenkontur (26) einen Winkel (α) von etwa 0,7° bis 1,7°, vorzugsweise 1,0° bis 1,4° bilden.

2. Verbindungsanordnung für einen Heißgas führenden Ringkanal eines Turbinenzwischengehäuses einer Gasturbine, insbesondere Fluggasturbine, umfassend
ein erstes Gehäuseelement (10), insbesondere ein Panel eines Turbinenzwischengehäuses,
ein zweites Gehäuseelement (12), insbesondere ein Fairing eines Turbinenzwischengehäuses, das in Umfangsrichtung (UR) neben dem ersten Gehäuseelement (10) angeordnet ist,
eine Befestigungseinheit, die dazu eingerichtet ist, das erste Gehäuseelement (10) und das zweite Gehäuseelement (12) an in Umfangsrichtung (UR) zueinander benachbarten Rändern (14, 18) des ersten Gehäuseelements (10) und des zweiten Gehäuseelements (12) basierend auf einer Klemmung derart miteinander zu verbinden, dass thermisch bedingte Relativbewegungen beim Übergang der Gasturbine von einem Betriebszustand in einen anderen Betriebszustand in bestimmten Grenzen erlaubt werden, wobei die Befestigungseinheit ein durch ein Verbindungsmittel (22), insbesondere Schrauben-Mutter-Verbindung, an dem einen Gehäuseelement (12) angebrachtes Klemmelement umfasst, das an einer an dem anderen Gehäuseelement (10) vorgesehenen Klemmfläche (16) anliegt, derart, dass das andere Gehäuseelement (10) zwischen dem Klemmelement (20) und dem einen Gehäuseelement (12) aufgenommen ist,
**dadurch gekennzeichnet, dass** die dem Klemmelement (20) zugewandte Oberseite der Klemmfläche (16) bezogen auf einen Längsschnitt, der im Wesentlichen parallel zu den benachbarten Rändern (14, 18) der beiden Gehäuseelemente (10, 12) verläuft und der in einer Ebene liegt, die die Drehachse der Gasturbine umfasst, eine Klemmflächenkontur (24a, 24b) aufweist, die derart ausgebildet ist, dass sie bei einer Entwölbung des ersten oder zweiten Gehäuseelements einer Verdrehung des Klemmelements (20) um eine Achse des Verbindungsmittels (22) entgegenwirkt, wobei
die Klemmflächenkontur (24a, 24b) wenigstens einen Klemmflächenkonturabschnitt aufweist, der eine Steigung aufweist, die sich von einer Steigung einer Oberflächenkontur (26) eines die Klemmfläche (16) umgebenden Oberflächenabschnitts des Gehäuseelements (10) unterscheidet, wobei die Klemmflächenkontur (24b) wenigstens einen gekrümmten Linienabschnitt aufweist, derart dass ein Abstand zwischen der Klemmflächenkontur (24b) und der Oberflächenkontur (26) zunimmt.

3. Verbindungsanordnung für einen Heißgas führenden Ringkanal eines Turbinenzwischengehäuses einer Gasturbine, insbesondere Fluggasturbine, umfassend
ein erstes Gehäuseelement (10), insbesondere ein Panel eines Turbinenzwischengehäuses,
ein zweites Gehäuseelement (12), insbesondere ein Fairing eines Turbinenzwischengehäuses, das in Umfangsrichtung (UR) neben dem ersten Gehäuseelement (10) angeordnet ist,
eine Befestigungseinheit, die dazu eingerichtet ist, das erste Gehäuseelement (10) und das zweite Gehäuseelement (12) an in Umfangsrichtung (UR) zueinander benachbarten Rändern (14, 18) des ersten Gehäuseelements (10) und des zweiten Gehäuseelements (12) basierend auf einer Klemmung derart miteinander zu verbinden, dass thermisch bedingte Relativbewegungen beim Übergang der Gasturbine von einem Betriebszustand in einen anderen Betriebszustand in bestimmten Grenzen erlaubt werden, wobei die Befestigungseinheit ein durch ein Verbindungsmittel (22), insbesondere Schrauben-Mutter-Verbindung, an dem einen Gehäuseelement (12) angebrachtes Klemmelement umfasst, das an einer an dem anderen Gehäuseelement (10) vorgesehenen Klemmfläche (16) anliegt, derart, dass das andere Gehäuseelement (10) zwischen dem Klemmelement (20) und dem einen Gehäuseelement (12) aufgenommen ist,
**dadurch gekennzeichnet, dass** die dem Klemmelement (20) zugewandte Oberseite der Klemmfläche (16) bezogen auf einen Längsschnitt, der im Wesentlichen parallel zu den benachbarten Rändern (14, 18) der beiden Gehäuseelemente (10, 12) verläuft und der in einer Ebene liegt, die die Drehachse der Gasturbine umfasst, eine Klemmflächenkontur (24a, 24b) aufweist, die derart ausgebildet ist, dass sie bei einer Entwölbung des ersten oder zweiten Gehäuseelements einer Verdrehung des Klemmelements (20) um eine Achse des Verbindungsmittels (22) entgegenwirkt, wobei ein auf der Klemmfläche (16) aufliegender Klemmabschnitt (28) des Klemmelements (20) kugelförmig ausgebildet ist, insbesondere in der Art einer Kugelkalotte, so dass zwischen dem Klemmelement (20) und der Klemmfläche (16) eine Punktanlage gebildet ist.

4. Turbinenzwischengehäuse für eine Gasturbine, insbesondere Fluggasturbine, umfassend einen Heißgas führenden Ringkanal der durch mehrere in Umfangsrichtung nebeneinander angeordnete Gehäuseelemente gebildet ist, wobei der Ringkanal in Umfangsrichtung begrenzt wird durch radial innere Gehäuseelemente und radial äußere Gehäuseelemente, wobei sich zwischen den inneren Gehäuseelementen und den äußeren Gehäuseelementen mehrere Strebenverkleidungselemente erstrecken, die in Umfangsrichtung verteilt angeordnet sind und in radialer Richtung durch den Ringkanal verlaufen, und wobei die inneren Gehäuseelemente und die äußeren Gehäuseelemente jeweils durch mehrere erste Gehäuseelemente und mehrere zweite Gehäuseelemente gebildet werden, **dadurch gekennzeichnet, dass** das Turbinenzwischengehäuse wenigstens eine Verbindungsanordnung nach einem der vorhergehenden Ansprüche umfasst.

5. Turbinenzwischengehäuse nach Anspruch 4, **dadurch gekennzeichnet, dass** ein erstes Gehäuseelement und ein zweites Gehäuseelement durch mehrere, insbesondere drei Befestigungseinheiten, die in axialer Richtung verteilt sind, miteinander verbunden sind.

6. Turbinenzwischengehäuse nach Anspruch 5, **dadurch gekennzeichnet, dass** bei radial äußeren Gehäuseelementen die in Strömungsrichtung letzte Befestigungseinheit eine Klemmflächenkontur aufweist, die der Verdrehung des Klemmelements entgegenwirkt.

7. Turbinenzwischengehäuse nach Anspruch 5 oder 6, **dadurch gekennzeichnet, dass** bei radial inneren Gehäuseelementen die in Strömungsrichtung erste Befestigungseinheit eine Klemmflächenkontur aufweist, die der Verdrehung des Klemmelements entgegenwirkt.

## Claims

1. Connecting arrangementfor an annular duct, conveying hot gas, of an intermediate turbine housing of a gas turbine, in particularan aircraft gas turbine, comprising
a first housing element (10), in particular a panel of an intermediate turbine housing,
a second housing element (12), in particular a fairing of an intermediate turbine housing, which element is arranged in the circumferential direction (UR) next to the first housing element (10),
a fastening unit which is configured to connect the first housing element (10) and the second housing element (12) to one another, at edges (14, 18) of the first housing element (10) and the second housing element (12) that are adjacent to one another in the circumferential direction (UR), based on clamping in such a way that thermally induced relative movements are allowed within certain limits when the gas turbine changes from one operating state to another operating state, the fastening unit comprising a clamping element which is attached to one housing element (12) by a connecting means (22), in particular a screw-nut connection, which clamping element rests against a clamping surface (16) provided on the other housing element (10) in such a way that the other housing element (10) is received between the clamping element (20) and the one housing element (12),
**characterized in that** the upper face of the clamping surface (16) facing the clamping element (20), in relation to a longitudinal section which extends substantially parallel to the adjacent edges (14, 18) of the two housing elements (10, 12) and which lies in a plane comprising the axis of rotation of the gas turbine, has a clamping surface contour (24a, 24b) which is designed in such a way that it counteracts a rotation of the clamping element (20) about an axis of the connecting means (22) when the first or second housing element is decambered,
the clamping surface contour (24a, 24b) having at least one clamping surface contour portion which has a slope that differs from a slope of a surface contour (26) of a surface portion of the housing element (10) surrounding the clamping surface (16), the clamping surface contour (24a) being a straight line that is inclined relative to a straight line of the surface contour (26), the line of the clamping surface contour (24a) and the line of the surface contour (26) forming an angle (α) of approximately 0.7° to 1.7°, preferably 1.0° to 1.4°.

2. Connecting arrangementfor an annular duct, conveying hot gas, of an intermediate turbine housing of a gas turbine, in particularan aircraft gas turbine, comprising
a first housing element (10), in particular a panel of an intermediate turbine housing,
a second housing element (12), in particular a fairing of an intermediate turbine housing, which element is arranged in the circumferential direction (UR) next to the first housing element (10),
a fastening unit which is configured to connect the first housing element (10) and the second housing element (12) to one another, at edges (14, 18) of the first housing element (10) and the second housing element (12) that are adjacent to one another in the circumferential direction (UR), based on clamping in such a way that thermally induced relative movements are allowed within certain limits when the gas turbine changes from one operating state to anotheroperating state, the fastening unit comprising a clamping element which is attached to one housing element (12) by a connecting means (22), in particular a screw-nut connection, which clamping element rests against a clamping surface (16) provided on the other housing element (10) in such a way that the other housing element (10) is received between the clamping element (20) and the one housing element (12),
**characterized in that** the upper face of the clamping surface (16) facing the clamping element (20), in relation to a longitudinal section which extends substantially parallel to the adjacent edges (14, 18) of the two housing elements (10, 12) and which lies in a plane comprising the axis of rotation of the gas turbine, has a clamping surface contour (24a, 24b) which is designed in such a way that it counteracts a rotation of the clamping element (20) about an axis of the connecting means (22) when the first or second housing element is decambered,
the clamping surface contour (24a, 24b) having at least one clamping surface contour portion which has a slope that differs from a slope of a surface contour (26) of a surface portion of the housing element (10) surrounding the clamping surface (16), the clamping surface contour (24b) having at least one curved line segment, such that a distance between the clamping surface contour (24b) and the surface contour (26) increases.

3. Connecting arrangementfor an annular duct, conveying hot gas, of an intermediate turbine housing of a gas turbine, in particularan aircraft gas turbine, comprising
a first housing element (10), in particular a panel of an intermediate turbine housing,
a second housing element (12), in particular a fairing of an intermediate turbine housing, which element is arranged in the circumferential direction (UR) next to the first housing element (10),
a fastening unit which is configured to connect the first housing element (10) and the second housing element (12) to one another, at edges (14, 18) of the first housing element (10) and the second housing element (12) that are adjacent to one another in the circumferential direction (UR), based on clamping in such a way that thermally induced relative movements are allowed within certain limits when the gas turbine changes from one operating state to another operating state, the fastening unit comprising a clamping element which is attached to one housing element (12) by a connecting means (22), in particular a screw-nut connection, which clamping element rests against a clamping surface (16) provided on the other housing element (10) in such a way that the other housing element (10) is received between the clamping element (20) and the one housing element (12),
**characterized in that** the upper face of the clamping surface (16) facing the clamping element (20), in relation to a longitudinal section which extends substantially parallel to the adjacent edges (14, 18) of the two housing elements (10, 12) and which lies in a plane comprising the axis of rotation of the gas turbine, has a clamping surface contour (24a, 24b) which is designed in such a way that it counteracts a rotation of the clamping element (20) about an axis of the connecting means (22) wh en the first or second housing element is decambered, a clamping portion (28) of the clamping element (20) resting on the clamping surface (16) being spherical, in particular in the form of a spherical cap, so that a point contact is formed between the clamping element (20) and the clamping surface (16).

4. Intermediate turbine housing for a gas turbine, in particularan aircraft gas turbine, comprising an annular duct, conveying hot gas, which is formed by a plurality of housing elements arranged next to one another in the circumferential direction, the annular duct being delimited in the circumferential direction by radially inner housing elements and radially outer housing elements, a plurality of strut cladding elements extending between the inner housing elements and the outer housing elements, which strut cladding elements are arranged so as to be distributed in the circumferential direction and extend through the annularduct in the radial direction, and the inner housing elements and the outer housing elements each being formed by a plurality of first housing elements and a plurality of second housing elements, **characterized in that** the intermediate turbine housing comprises at least one connecting arrangement according to any of the preceding claims.

5. Intermediate turbine housing according to claim 4, **characterized in that** a first housing element and a second housing element are connected to one another by a plurality of, in particular three, fastening units which are distributed in the axial direction.

6. Intermediate turbine housing according to claim 5, **characterized in that**, in the case of radially outer housing elements, the last fastening unit in the direction of flow has a clamping surface contour which counteracts the rotation of the clamping element.

7. Intermediate turbine housing according to either claim 5 or claim 6, **characterized in that**, in the case of radially inner housing elements, the first fastening unit in the direction of flow has a clamping surface contour which counteracts the rotation of the clamping element.

## Revendications

1. Agencement de raccordement destiné à un canal annulaire, transportant des gaz chauds, d'un carter intermédiaire de turbine d'une turbine à gaz, en particulier d'une turbine à gaz d'aéronef, comprenant
un premier élément de carter (10), en particulierun panneau d'un carter intermédiaire de turbine,
un second élément de carter (12), en particulier un carénage d'un carter intermédiaire de turbine, qui est disposé dans la direction circonférentielle (UR) à côté du premier élément de carter (10),
une unité de fixation conçue pour raccorder le premier élément de carter (10) et le second élément de carter (12) aux bords (14, 18) adjacents les uns auxautres dans la direction circonférentielle (UR) du premier élément de carter(10) et du second élément de carter (12), sur la base d'un serrage, de telle sorte que des mouvements relatifs induits thermiquement sont permis dans certaines limites lorsque la turbine à gaz passe d'un état de fonctionnement à un autre état de fonctionnement, l'unité de fixation comprenant un élément de serrage monté sur le premier élément de carter(12) par un moyen de raccordement (22), en particulier parun raccordement vis-écrou, lequel élément de serrage reposant contre une surface de serrage (16) prévue sur l'autre élément de carter (10) de telle manière que l'autre élément de carter (10) est reçu entre l'élément de serrage (20) et le premier élément de carter (12),
**caractérisé en ce que** la face supérieure de la surface de serrage (16) faisant face à l'élément de serrage (20) présente, par rapport à une coupe longitudinale qui s'étend sensiblement parallèlement aux bords (14, 18) adjacents des deux éléments de carter (10, 12) et qui se trouve dans un plan qui comprend l'axe de rotation de la turbine à gaz, un contour de surface de serrage (24a, 24b), lequel est conçu de telle sorte qu'il s'oppose à une rotation de l'élément de serrage (20) autour d'un axe du moyen de raccordement (22) lorsque le premier ou le second élément de carter est déformé,
le contour de surface de serrage (24a, 24b) présentant au moins une section de contour de surface de serrage qui présente une pente, laquelle diffère d'une pente d'un contour de surface (26) d'une section de surface de l'élément de carter (10) entourant la surface de serrage (16), le contour de surface de serrage (24a) étant une ligne rectiligne inclinée par rapport à une ligne rectiligne du contour de surface (26), la ligne du contourde surface de serrage (24a) et la ligne du contour de surface (26) formant un angle (α) d'environ 0,7° à 1,7°, de préférence de 1,0° à 1,4°.

2. Agencement de raccordement destiné à un canal annulaire, transportant des gaz chauds, d'un carter intermédiaire de turbine d'une turbine à gaz, en particulier d'une turbine à gaz d'aéronef, comprenant
un premier élément de carter (10), en particulierun panneau d'un carter intermédiaire de turbine,
un second élément de carter (12), en particulier un carénage d'un carter intermédiaire de turbine, qui est disposé dans la direction circonférentielle (UR) à côté du premier élément de carter (10),
une unité de fixation conçue pour raccorder le premier élément de carter (10) et le second élément de carter (12) aux bords (14, 18) adjacents les uns aux autres dans la direction circonférentielle (UR) du premier élément de carter(10) et du second élément de carter (12), sur la base d'un serrage, de telle sorte que des mouvements relatifs induits thermiquement sont permis dans certaines limites lorsque la turbine à gaz passe d'un état de fonctionnement à un autre état de fonctionnement, l'unité de fixation comprenant un élément de serrage monté sur le premier élément de carter(12) par un moyen de raccordement (22), en particulier par un raccordement vis-écrou, lequel élément de serrage reposant contre une surface de serrage (16) prévue sur l'autre élément de carter (10) de telle manière que l'autre élément de carter (10) est reçu entre l'élément de serrage (20) et le premier élément de carter (12),
**caractérisé en ce que** la face supérieure de la surface de serrage (16) faisant face à l'élément de serrage (20) présente, par rapport à une coupe longitudinale qui s'étend sensiblement parallèlement aux bords (14, 18) adjacents des deux éléments de carter (10, 12) et qui se trouve dans un plan qui comprend l'axe de rotation de la turbine à gaz, un contour de surface de serrage (24a, 24b), lequel est conçu de telle sorte qu'il s'oppose à une rotation de l'élément de serrage (20) autour d'un axe du moyen de raccordement (22) lorsque le premier ou le second élément de carter est déformé,
le contour de surface de serrage (24a, 24b) présentant au moins une section de contour de surface de serrage qui présente une pente, laquelle diffère d'une pente d'un contour de surface (26) d'une section de surface de l'élément de carter (10) entourant la surface de serrage (16), le contour de surface de serrage (24b) présentant au moins une section de ligne courbe, de telle sorte qu'une distance entre le contour de surface de serrage (24b) et le contour de surface (26) augmente.

3. Agencement de raccordement destiné à un canal annulaire, transportant des gaz chauds, d'un carter intermédiaire de turbine d'une turbine à gaz, en particulier d'une turbine à gaz d'aéronef, comprenant
un premier élément de carter (10), en particulier un panneau d'un carter intermédiaire de turbine,
un second élément de carter (12), en particulier un carénage d'un carter intermédiaire de turbine, qui est disposé dans la direction circonférentielle (UR) à côté du premier élément de carter (10),
une unité de fixation conçue pour raccorder le premier élément de carter (10) et le second élément de carter (12) aux bords (14, 18) adjacents les uns auxautres dans la direction circonférentielle (UR) du premier élément de carter (10) et du second élément de carter (12), sur la base d'un serrage, de telle sorte que des mouvements relatifs induits thermiquement sont permis dans certaines limites lorsque la turbine à gaz passe d'un état de fonctionnement à un autre état de fonctionnement, l'unité de fixation comprenant un élément de serrage monté sur le premier élément de carter(12) par un moyen de raccordement (22), en particulier parun raccordement vis-écrou, lequel élément de serrage reposant contre une surface de serrage (16) prévue sur l'autre élément de carter (10) de telle manière que l'autre élément de carter (10) est reçu entre l'élément de serrage (20) et le premier élément de carter (12),
**caractérisé en ce que** la face supérieure de la surface de serrage (16) faisant face à l'élément de serrage (20) présente, par rapport à une coupe longitudinale qui s'étend sensiblement parallèlement aux bords (14, 18) adjacents des deux éléments de carter (10, 12) et qui se trouve dans un plan qui comprend l'axe de rotation de la turbine à gaz, un contour de surface de serrage (24a, 24b), lequel est conçu de telle sorte qu'il s'oppose à une rotation de l'élément de serrage (20) autour d'un axe du moyen de raccordement (22) lorsque le premier ou le second élément de carter est déformé, une section de serrage (28) de l'élément de serrage (20) reposant sur la surface de serrage (16) étant sphérique, en particulier en forme de calotte sphérique, de sorte qu'un point de contact est formé entre l'élément de serrage (20) et la surface de serrage (16).

4. Carter intermédiaire de turbine destiné à une turbine à gaz, en particulier à une turbine à gaz d'aéronef, comprenant un canal annulaire, transportant des gaz chauds, qui est formé de plusieurs éléments de carter disposés les uns à côté des autres dans la direction circonférentielle, le canal annulaire étant délimité dans la direction circonférentielle par des éléments de carter radialement intérieurs et des éléments de carter radialement extérieurs, plusieurs éléments de revêtement d'entretoise s'étendant entre les éléments de carter intérieurs et les éléments de carter extérieurs, lesquels éléments de revêtement d'entretoise étant disposés répartis dans la direction circonférentielle et s'étendant dans le sens radial à travers le canal annulaire, et les éléments de carter intérieurs et les éléments de carter extérieurs étant respectivement formés par plusieurs premiers éléments de carter et plusieurs seconds éléments de carter, **caractérisé en ce que** le carter intermédiaire de turbine comprend au moins un agencement de raccordement selon l'une des revendications précédentes.

5. Carter intermédiaire de turbine selon la revendication 4, **caractérisé en ce qu'**un premier élément de carter et un second élément de cartersont reliés l'un à l'autre par plusieurs, en particulier trois, unités de fixation réparties dans le sens axial.

6. Carter intermédiaire de turbine selon la revendication 5, **caractérisé en ce que**, pour les éléments de carter radialement extérieurs, la dernière unité de fixation dans le sens d'écoulement présente un contour de surface de serrage qui s'oppose à la rotation de l'élément de serrage.

7. Carter intermédiaire de turbine selon la revendication 5 ou 6, **caractérisé en ce que**, pour les éléments de carter radialement intérieurs, la première unité de fixation dans le sens d'écoulement présente un contour de surface de serrage qui s'oppose à la rotation de l'élément de serrage.
